# EUROPEAN PATENT SPECIFICATION

(11) **EP 2 527 285 B1**
(45) Date of publication and mention of the grant of the patent: **16.07.2014**
(21) Application number: 12164679.8
(22) Date of filing: 19.04.2012
(51) Int. Cl.: B65G 67/60, B66C 23/06, B66C 23/08, B66C 23/82, B66C 23/62, B66C 23/18, B65G 67/00

(54) **Bucket crane with conveyor**
Schaufelkran mit Förderband
Grue à benne dotée d'un transporteur

(30) Priority: 25.05.2011 JP 2011116804; 28.07.2011 JP 2011165043
(43) Date of publication of application: 28.11.2012
(60) Divisional application: 13198299.3
(73) Proprietor: Teraoka Shoji Inc., Kure-shi, Hiroshima 737-0154 (JP)
(72) Inventor: Teraoka, Kyuya, Kure-shi,, Hiroshima 7370154 (JP)
(74) Representative: Witte, Weller & Partner Patentanwälte mbB

(56) References cited:
- WO-A2-2006/084739
- CH-A- 487 794
- CN-Y- 201 284 194
- JP-A- 2002 053 290
- US-A- 4 170 291

## Description

### Technical Field

The present invention pertains to a crane, and more particularly to a crane for unloading freight such as coal, iron ore, and the like, using a bucket.

### Background Art

Freight such as coal or iron ore carried by barges or the like is unloaded with the barge moored along a wharf. The unloaded coal, etc. is carried to a predetermined location by a conveyor installed on land. Jib cranes of the type set forth in Patent Citation 1, for example, are widely used for such unloading work.

### Prior Art References

### Patent References

Patent Citation 1: Japanese Patent Application Unexamined Publication 2002-53290

### Summary of the Invention

### Problems the Invention Seeks to Resolve

When unloading shipboard coal or the like onto a conveyor using a jib crane, it is necessary to lower a bucket attached at the end of a jib crane wire by feeding out the wire, fill the shipboard coal into the bucket, raise the bucket by hoisting the wire, and move the bucket over the conveyor by rotating the arm in the horizontal direction.

However, because of the extremely long time required for this wire outfeeding/hoisting, horizontal rotation of the arm, and so forth, unloading of coal or the like is time consuming.

Document US 4,170,291 A discloses an articulate conveyor system for a tower crane, including an apparatus for conveying concrete mix to distant, elevated points, and including a two-segment discharge conveyor with its outer segment suspended from a movable trolley that is mounted on the boom of a cantilever crane. The segments are pivotally joined and the discharge point of the outer segment may be positioned by swinging the boom and first conveyor and driving the trolley along the boom.

Document JP 2002 053 290 A discloses a crane comprising a base portion, a crane main unit erected on the base portion, and an arm connected to the crane main unit so as to be rotatable in the vertical direction.

Document CH 487 794 A discloses a conveyor crane which has a conveyor belt rotationally coupled to an arm of a crane.

Document WO 2006/084739 discloses a bucket crane according to the preamble of claim 1

The present invention of a crane according to claim 1 was undertaken in light of the above problems, and enables the work of unloading coal or the like with a crane to be performed in a short time.

The crane of the present invention is a crane for unloading freight using a bucket, comprising a base portion; a crane main unit portion erected on the base portion; an arm extending in approximately the horizontal direction from the crane main unit; a conveyor mechanism extending in approximately the horizontal direction from the crane main unit below the arm; a wire support portion attached to the arm and capable of advancing and retracting along said arm; a wire an end portion of which is suspended from the wire support portion and which is connected at its end portion to the bucket; and a wire outfeed device capable of outfeeding and winding wire; wherein the arm and conveyor mechanism are rotatable in the horizontal direction around the same axis so that, in plan view, the direction in which the arm extends at all times matches the direction in which the conveyor mechanism extends.
In the present invention thus constituted, the arm and conveyor mechanism are rotatable in the horizontal direction around the same axis so that, in plan view, the direction in which the arm extends at all times matches the direction in which the conveyor mechanism extends, therefore the bucket can be moved between the position at which coal is filled and a position over the conveyer, simply by manipulating the wire support portion and the wire outfeed device, without rotating the arm in the horizontal direction. Rotation of the arm in the horizontal direction, which was previously extremely time-consuming in the coal unloading operation, can thus be omitted, and the coal unloading operation carried out in a short time.

In the present invention the conveyor mechanism may also extend and retract in the longitudinal direction.
In the present invention thus constituted, even if the coal is in a position separated from the crane main unit, by extending the conveyor mechanism in the longitudinal direction, the unloading operation can be accomplished without advancing or retracting the wire support portion.

The crane of the present invention is a crane for unloading freight using a bucket, comprising: a base portion; a crane main unit portion erected on the base portion; an arm extending in approximately the horizontal direction from the crane main unit; a conveyor mechanism extending in approximately the horizontal direction from the crane main unit below the arm; a wire support portion attached to the arm; a wire an end portion of which is suspended from the wire support portion and which is connected at its end portion to the bucket; and a wire outfeed device capable of outfeeding and winding wire; wherein the conveyor mechanism is capable of extending and retracting in the longitudinal direction, and wherein the arm and conveyor mechanism are rotatable in the horizontal direction around the same axis so that, in plan view, the direction in which the arm extends at all times matches the direction in which the conveyor mechanism extends.

In the present invention thus constituted, the arm and conveyor mechanism are rotatable in the horizontal direction around the same axis so that, in plan view, the direction in which the arm extends at all times matches the direction in which the conveyor mechanism extends, therefore the bucket can be moved between the position at which the coal was loaded and a position over the conveyer by manipulating the wire outfeed device and the conveyor mechanism, without rotating the arm in the horizontal direction.

In the present invention the conveyor mechanism is preferably furnished with a conveyor member, and a receiver member connected to the end portion of said conveyor member and capable of rotating within a predetermined angular range of motion between a frontward upward inclined orientation and a directly upward extending orientation; wherein the conveyor mechanism is capable of extending and retracting in the longitudinal direction by rotating the receiver member from the directly upward extending orientation to the frontward upward inclined orientation.
In the present invention thus constituted, coal or the like can be unloaded by bucket simply by the wire outfeed device's outfeeding and winding of wire and rotational manipulation of the receiver member.

In the present invention the conveyor mechanism is preferably furnished with at least one pair of conveyor members, and the conveyor members is capable of extending and retracting in the longitudinal direction by movement in the direction in which the conveyor mechanism extends of one of at least a pair of conveyor members relative to the other such conveyor member, which is connected to the conveyor main unit portion.
In the present invention thus constituted, coal can be unloaded using the bucket simply by outfeeding and winding of wire using the wire outfeed device, and by moving the conveyor member.

In the present invention the conveyor is preferably capable of moving up and down relative to the crane main unit.
In such a constitution, when a barge loaded with coal rises at high tide or as the cargo amount is reduced, the work of unloading coal can be performed without increasing bucket raising and lowering height by raising the conveyor to match a barge's rise.

In the present invention the conveyor is preferably capable of rotational movement in the upward direction relative to the crane main unit.
In such a constitution, even when the coal unloading work proceeds and the amount of loaded coal decreases, the work of unloading coal can be performed without increasing the height of bucket raising and lowering by rotating the conveyor downward.
Note that "approximately horizontal direction" above refers to the fact that the wire support portion can be easily advanced and retracted, or to being within a range of inclination angles such that coal or the like on the conveyor does not roll off.

### Effect of the Invention

Using the present invention, the work of unloading coal or the like can be performed in a short time.

### Brief Description of Figures

Fig. 1: A plan view of a transport vessel on which is mounted a bucket crane according to a reference embodiment.
Fig. 2: A front elevation of a transport vessel on which is mounted a bucket crane according to the reference embodiment.
Fig. 3: A side elevation showing the state in which the bucket in a bucket crane according to the reference embodiment is in a lowered state.
Fig. 4: A side elevation showing the state in which the bucket in a bucket crane according to the reference embodiment is in a raised state.
Fig. 5: A front elevation of a bucket crane in the state shown in Fig. 4.
Fig. 6: A side elevation of a bucket crane according to an embodiment of the present invention.
Fig. 7: A side elevation showing the state in which the bucket in a bucket crane according to the embodiment of the present invention is in a lowered state.
Fig. 8: A side elevation showing the state in which the bucket in a bucket crane according to the embodiment of the present invention is in a raised state.
Fig. 9: A side elevation of a bucket crane in an embodiment in which the receiver member is omitted.

### Embodiments of the Invention

Below, referring to figures, we discuss details of a bucket crane with attached conveyor according to a first embodiment of the present invention.

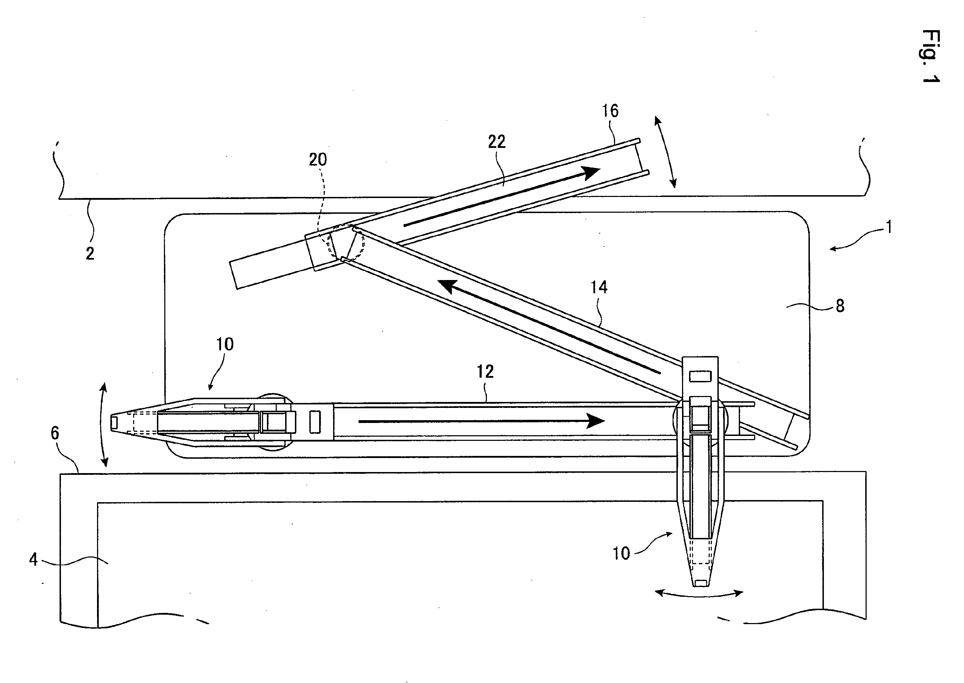

Fig. 1 is a plan view of a transport vessel furnished with a bucket crane for moving coal from a barge onto a wharf.

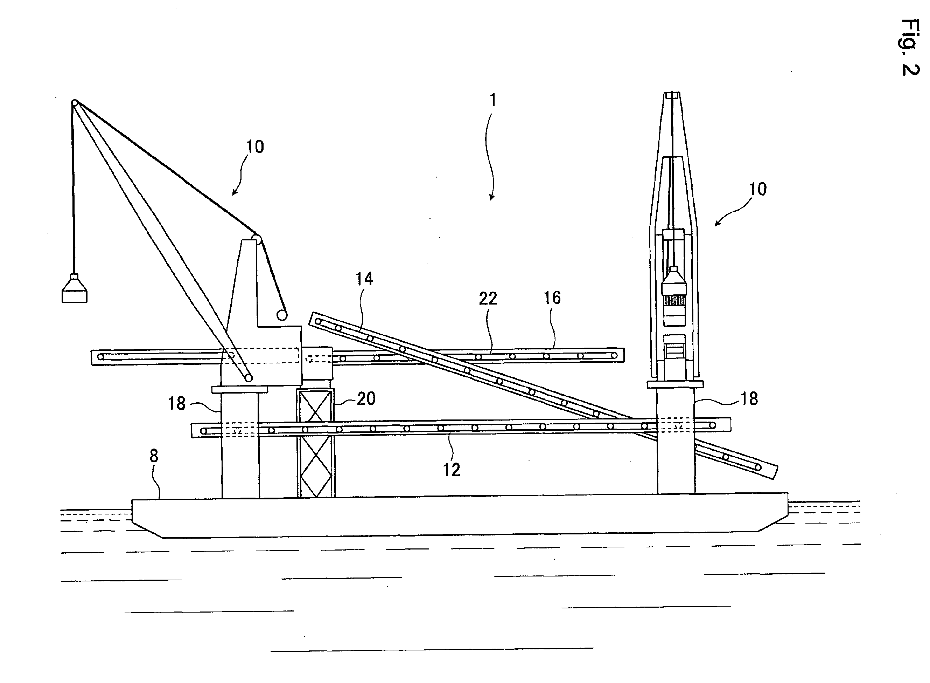

Fig. 2 is a front elevation of the transport vessel shown in Fig. 1.
As shown in Fig. 1, a transport vessel 1 is moored between a wharf 2 and a barge 6 loaded with coal 4; the coal 4 on the barge 6 is conveyed up to the wharf 2.

As shown in Figs. 1 and 2, the transport vessel 1 is furnished with two bucket cranes 10 spaced apart with each other along the one longitudinal side edge of an approximately rectangular deck 8, a first conveyor 12 erected horizontally along the one longitudinal side edge of the deck 8, a second conveyor 14 erected inclinatory along the approximately diagonal direction on the deck 8, and a third conveyor 16 erected on the other longitudinal side edge of the deck 8.

As shown in Fig. 2, the first conveyor 12 passes horizontally through the base section 18 of each of the bucket cranes 10, and the downstream end portion is positioned above the upstream end portion of the second conveyor 14. Coal loaded onto the first conveyor 12 is fed toward the end portion on the bottom side of the second conveyor 14 and then falls from the end portion on the downstream side onto the second conveyor 14.

The downstream end portion of the second conveyor 14 is positioned over the base portion 20 of the third conveyor 16. Coal falling from the first conveyor 12 onto the second conveyor 14 is fed in a diagonal upward direction by the second conveyor 14, and falls from above the base portion 20 of the third conveyor 16 onto the third conveyor 16.

The third conveyor 16 is furnished with a base portion 20 and a conveyor main unit portion 22 erected on the base portion 20 and capable of rotational movement in the horizontal direction around the base portion 20. In the present embodiment, the end of the conveyor main unit portion 22 rotates and is positioned on the wharf 2 in order to carry the coal 4 on the barge 6 to the wharf 2. Coal falling from the downstream end portion of the second conveyor 14 onto the third conveyor 16 is carried to the wharf 2 by the conveyor main unit portion 22.

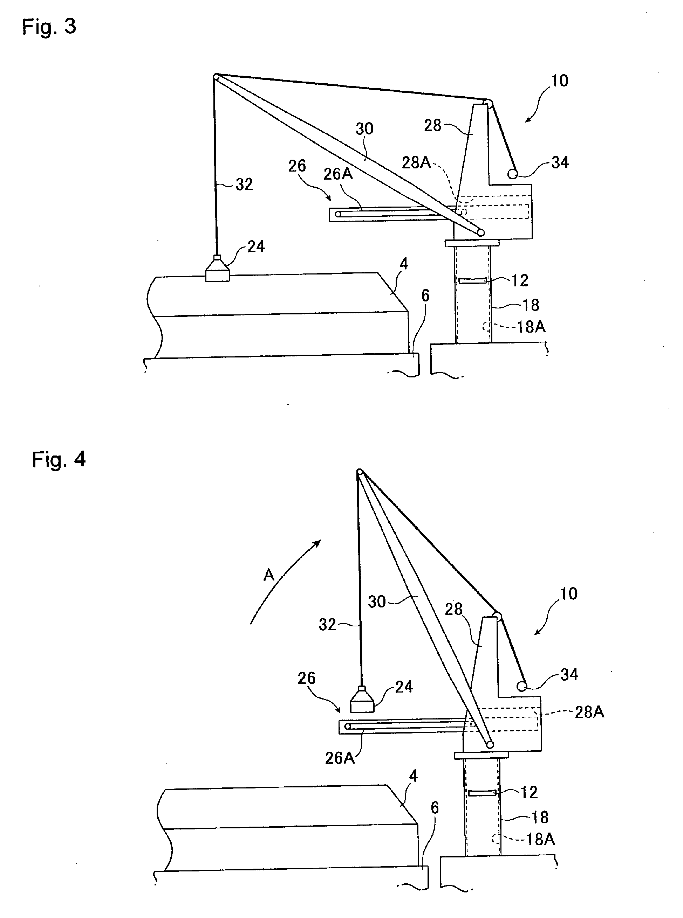

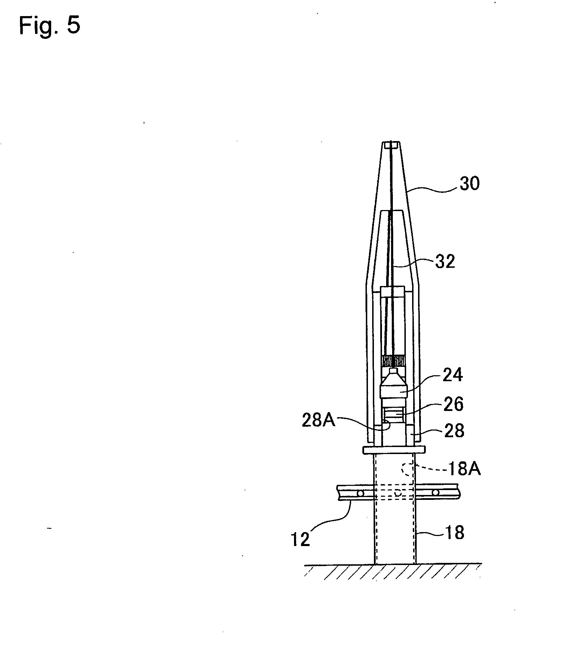

Figs. 3 and 4 are side elevations of the bucket crane 10 of the present embodiment, respectively showing the state in which a bucket 24 has been lowered in order to fill the coal 4 on the barge 6 into the bucket 24, and the state in which the bucket 24 is raised in order to load the coal held in the bucket 24 onto a conveyor mechanism 26. Fig. 5 is a front elevation of a bucket crane 10 in the state shown in Fig. 4.

As shown by Figs. 3 and 4, the bucket crane 10 is furnished with similar constituent elements to bucket cranes of the conventional art, such as a base portion 18 erected on the deck 8 of a transport vessel, a main unit 28 installed over the base portion 18, an arm 30 attached to the main unit 28, a wire 32 suspended from the end of the arm 30, a bucket 24 attached to the end of the wire 32, and a wire outfeed device 34 for outfeeding the wire 32. The bucket crane 10 in the present embodiment is furnished with a conveyor mechanism 26 attached to the main unit 28 so as to extend in approximately the horizontal direction. Note that "approximately horizontal direction" here refers to being within a range of inclination angles such that the coal on the conveyor mechanism 26 does not fall off.

The base portion 18 is formed of steel pipe, within which a through-holes 18A vertically extending is formed. As shown in Fig. 5, the first conveyor 12 passes horizontally through the midway portion of the base portion 18, and the first conveyor 12 is exposed within the through-hole 18A.

The main unit 28 is erected above the base portion 18 so as to be rotatable in the horizontal direction around the center axis of the base portion 18. As shown in Fig. 5, the main unit 28 is furnished with two leg portions separated in the lateral direction, and a conveyor housing space 28A formed between them communicates with the base portion 18 through-hole 18A.

The conveyor mechanism 26 is a member formed, for example, from a truss framework and including a conveyor main unit portion 26A; the back end portion thereof is held in an inserted state in the conveyor housing space 28A. The conveyor main unit portion 26A of the conveyor mechanism 26 is terminated at the top of through-hole 18A in the base portion 18. Using a method such as hoisting a wire attached to the end of the conveyor mechanism 26 with a winch, the conveyor mechanism 26 is rotatable in a predetermined angular range of motion in the up/down direction relative to the main unit 28 around the position at which the conveyor main unit portion 26A terminates.

The arm 30 is attached to the main unit 28 at the bottom end in a state whereby it is inclined frontward and upward. The arm 30 can be rotated in only a predetermined angular range of rotation in the up/down direction around the bottom end attached to the main unit 28. Note that in this embodiment what is shown is the case in which the bottom end of the arm 30 is attached to the main unit 28, but there is no limitation to this form, and the intermediate portion of the arm may be attached to the main unit, with a counterweight attached to the bottom end portion of the arm.

The wire outfeed device 34 is formed, for example, of a winch; it is attached to the main unit 28, and feeds out or pulls in the wire 32 in response to controls by an operator.
The bucket 24 can also be opened and closed by remote control so that coal can be placed therein, and coal contained therein can be discharged.

As explained above, in the bucket crane 10 of the present embodiment the arm 30 and conveyor mechanism 26 are connected to the main unit 28 which is rotatable in the horizontal direction around the center axis of the base portion 18, therefore the arm 30 and the conveyor mechanism 26 are able to rotate in a horizontal direction as an integral unit around the center axis of the base portion 18 so as to be at all times in a state of extension in the same direction as the horizontal direction as seen in plan view.

Below we discuss a method for transporting coal from a barge 6 to a wharf 2 using a transport vessel 1 including the bucket crane 10 described above.
First, as shown in Fig. 3, the arm 30 is rotated downward. This causes the bucket 24 to move in the forward direction and to descend toward the pile of coal 4 inside the hold of the barge 6. When the bucket 24 has descended to the coal pile, the bucket 24 is released and its interior filled with coal, whereupon the bucket 24 is again closed.

Next, as shown in Fig. 4, the arm 30 is rotated upward. At this point there is no need to pull in the wire 32 using the wire outfeed device 34. By rotating the arm 30 in the upward direction, the bucket 24 moves upward and toward the main unit 28. As described above, in the bucket crane 10, the arm 30 and the conveyor mechanism 26 are at all times oriented at the same angle in the horizontal direction, therefore by rotating the arm 30 upward, the bucket 24 moves to a position over the conveyor mechanism 26 conveyor main unit portion 26A.

Thus in the bucket crane 10 of the present embodiment, the bucket 24 can be moved between a coal pile 4 and a position over the conveyor main unit portion 26A by rotating the arm 30 in the up/down direction, without feeding out or pulling in the wire 32 with the wire outfeed device 34, and without rotation in the horizontal direction of the arm 30. Therefore the outfeeding/pulling in by the wire outfeed device 34 of the wire 32, and the rotation of the arm 30 in the horizontal direction, which were previously extremely time-consuming tasks, can be omitted; in addition, the work of rotating the arm 30 in the up/down direction can be done in an extremely short time compared to the outfeeding/pulling in by wire outfeed device 34 of the wire 32 and the rotation of the arm 30 in the horizontal direction, therefore the time required for loading coal onto the conveyor mechanism 26 can be extremely curtailed.

Next, the bucket 24 is opened in this state, and the coal held within it is dropped. Coal which has fallen from the bucket 24 is loaded onto the conveyor main unit portion 26A of the conveyor mechanism 26. Coal loaded onto the conveyor main unit portion 26A of the conveyor mechanism 26 is carried toward the main unit 28, and falls from the end portion of the conveyor main unit portion 26A in the conveyor housing space 28A. As described above, the conveyor housing space 28A and the through-hole 18A of the base portion 18 communicate, and the end portion of the conveyor main unit portion 26A is positioned over the through-hole 18A of the base portion 18, therefore coal falling from the conveyor main unit portion 26A falls toward the base portion 18 through-hole 18A, and is loaded onto the first conveyor 12 extending in the horizontal direction within the through-hole 18A.

Note that when the unloading of coal on the barge 6 progresses and the height of the pile of coal 4 on the barge 6 diminishes, it is sufficient that the wire 32 is fed out by the wire outfeed device 34 so that the length of the wire 32 suspended from the end of the arm 30 is lengthened, and the conveyor mechanism 26 is rotated in the downward direction. By doing so, coal can be loaded onto the conveyor mechanism 26 in the same manner described above, even if the height of the coal pile 4 diminishes. Conversely, when the height of the coal pile 4 is high, it is sufficient for the wire outfeed device 34 to pull in the wire 32, thereby shortening the length of the wire 32 suspended from the end of the arm 30, and to rotate the conveyor mechanism 26 upward.

In this way the coal transferred from the barge 6 onto the first conveyor 12 is carried to a position over the downstream end portion of the second conveyor 14 along the edge of the transport vessel deck 8 by the first conveyor 12 and dropped onto the second conveyor 14 from the downstream end portion. Coal which has fallen onto the second conveyor 14 is carried upward in the diagonal direction of the transport vessel 1 by the second conveyor 14, and falls from the downstream end portion of the second conveyor 14 onto the conveyor main unit portion 22 of a third conveyor 16. Coal which has fallen onto conveyor main unit portion 22 of the third conveyor 16 is carried to the wharf by the third conveyor 16.

As explained above, with the bucket crane 10 of the present embodiment, the arm 30 and the conveyor mechanism 26 are rotated in the horizontal direction so that the direction in which the arm 30 extends and the direction in which the conveyor mechanism 26 extends at all times match in plan view, therefore the bucket 24 can be moved between the position at which coal is held on the barge and a position above the conveyor mechanism 26 simply by rotating the arm 30 downward.

Therefore the outfeeding/pulling in the wire 32 by wire outfeed device 34 and the rotation of the arm 30 in the horizontal direction which were previously extremely time-consuming can be omitted; in addition, the work of rotating the arm 30 in the up/down direction can be done in an extremely short time compared to the outfeeding/pulling in the wire 32 by wire outfeed device 34 and rotation of the arm 30 in the horizontal direction, therefore the work of moving coal from a barge 6 to a wharf 2 can be extremely curtailed. In particular, the wire outfeed/hoisting operation by wire outfeed device and the rotation of the arm in the horizontal direction were repeated many times in the coal unloading work, therefore coal unloading time can be cut significantly.

Because the conveyor mechanism 26 can be rotated up and down, when the amount of coal 4 loaded onto the deck of the barge 6 is reduced and thus the height of the coal pile is lowered, by rotating the conveyor mechanism 26 into a downward-rotated state, and feeding out the wire 32 using the wire outfeed device 34 to lengthen the wire 32 suspended from the end of the arm 30, coal can be moved from the barge 6 to a position over the conveyor mechanism 26 simply by rotating the arm 30 up and down. Conversely, when the height of the coal pile 4 is high, by pulling in the wire 32 using the wire outfeed device 34 to shorten the length of the wire 32 suspended from the end of the 30, as well as rotating the conveyor mechanism 26 upward, coal can be moved from the barge 6 to a position over the conveyor mechanism 26 simply by rotating the arm 30 up and down.

Note that in the present embodiment we explained the case of unloading coal, but the present invention is not limited thereto, and could be applied to a crane of the present invention for the work of unloading cargo such as iron ore, chips, and the like.
Also, in the present embodiment we explained a bucket crane 10 affixed to a transport vessel 1, but the invention is not limited thereto, and may be applied to a movable bucket crane.

In the present embodiment there is no feeding out or pulling in whatsoever of the wire 32 by the wire outfeed device 34 during unloading, but the invention is not limited thereto, and outfeeding/pulling in of the wire 32 by the wire outfeed device 34 may also be performed. In such cases, as well, because the length of the wire 32 outfed/pulled in by the wire outfeed device 34 is much shorter when compared to the conventional method, work time can be reduced.

In the present embodiment a constitution was adopted whereby the arm 30 and the conveyor mechanism 26 are rotated in the horizontal direction by rotation of the main unit 28 relative to the base portion 18, but the invention is not limited thereto, and it is also acceptable to provide respective rotation mechanisms for the arm 30 and the conveyor mechanism 26. In such cases, by synchronizing the rotational angles of the various rotation mechanisms, the arm 30 and the conveyor mechanism 26 are at all times in a state of extension in the same lateral direction when seen in plan view.
Further, in the above present embodiment we explained the case in which coal or the like is moved from a barge to a wharf, but the present invention is not limited thereto, and may be applied to cases in which coal or the like is moved from a barge to another vessel, or cases in which coal or the like is moved from a wharf to a barge.

Below, referring to figures, we discuss details of a bucket crane with conveyor according to an embodiment of the present invention. Note that in the present embodiment, for the constituent elements which are the same as in the reference embodiment we assign the same reference numerals in the figures and omit an explanation thereof.

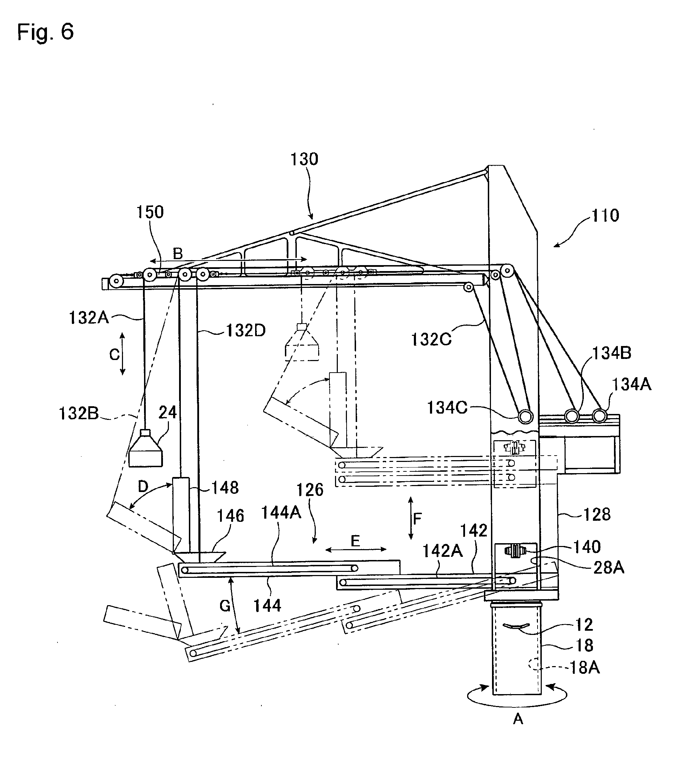

Fig. 6 is a side elevation of a bucket crane 110 according to the present embodiment.
As shown in Fig. 6, the bucket crane 110 is furnished with a base portion 18 vertically erected on a transport vessel or on land, a main unit 128 installed above the base portion 18, an arm 130 attached to the top end of the main unit 128 so as to extend in the horizontal direction, a wire 132A suspended from the end of the arm 130, a bucket 24 attached to the end of the wire 132A, and wire outfeed mechanisms 134A, 134B, and 134C capable of winding up and feeding out wires 132A, 132B, and 132C. The bucket crane 110 is further furnished with a conveyor member 126 attached to the main unit 128.

In the present embodiment, as well, the base portion 18 is formed of steel pipe, within which a vertically-extending through-hole 18A is formed. The first conveyor 12 passes horizontally through the midway portion of the base portion 18, and this first conveyor 12 is exposed within the through-hole 18A.

The main unit 128 is erected above the base portion 18 so as to be rotatable in the horizontal direction (the direction of arrow A) around the center axis of the base portion 18; by this means the arm 130 and conveyor member 126 attached to the main unit 128 can rotate in synchrony. The main unit 128 is furnished with two leg portions, separated in the lateral direction as in the reference embodiment, and the conveyor housing space formed between them communicates with the base portion 18 through-hole 18A.

The conveyor member 126 is furnished with: a conveyor base portion 140 capable of ascending and descending within the conveyor housing space, a first conveyor member 142 supported by the conveyor base portion 140 so as to extend in the same direction as the arm 130 seen in plan view, a second conveyor member 144 connected so as to be able to slide in the axial direction on the top portion of the first conveyor member 142, a hopper 146 attached to the end of the second conveyor member 144, and a receiver member 148 attached so as to be able to rotate forward and backward on the end portion of the hopper 146.

The conveyor base portion 140 is capable of ascending and descending in the direction of arrow F relative to the main unit 128 in the conveyor housing space by means, for example, of uptake using a winch, or by use of a rack and pinion mechanism.
The first and second conveyor members 142 and 144 are members composed, for example, of truss frames including conveyor main unit portions 142A and 144A, formed of conveyor belts. The first conveyor member 142 is supported so as to be able to rotate within a predetermined angular range in an up/down direction (the direction of arrow G) relative to the conveyor base portion 140, around the position at which the belt main unit 142A terminates.
The second conveyor member 144 is able to slide along the longitudinal direction of the first conveyor member 142. The conveyor member 126 is thus able to advance and retract.

Note that in the present embodiment, the bottom end of the wire extending from the wire support portion 150 mounted on the arm 130 is connected to the second conveyor member 144. The second conveyor member 144 thus synchronizes with movement of the wire support portion 150 and advances and retracts relative to the first conveyor member 142.

The hopper 146 is formed so that its width narrows in the downward direction so that coal inserted into its top portion drops to the top of the conveyor main unit portion 144A on the second conveyor member 144.
The receiver member 148 is formed from steel material with a "U-shaped" cross section open at the top. The receiver member 148 is attached rotatably to the end of the hopper 146 at its base end portion; the bottom end of wire 132B suspended from the wire support portion 150 is connected to the end portion thereof. By winding and outfeeding of the wire outfeed mechanism 134B, the receiver member 148 is thus able to rotate in a predetermined angular range between a forward upward inclined state and an upright state.

The arm 130 extends in the horizontal direction from the top end of the main unit 128; a wire support portion 150 is mounted on the top portion thereof so as to be able to slide in the axial direction. A wire extending from the wire outfeed mechanism 134C is connected to the wire support portion, which advances and retracts along the arm 130 through the winding or outfeeding of the wire 132C by the wire outfeed mechanism 134C.

The wire outfeed mechanisms 134A, 134B, and 134C formed by winches, for example, are attached to the main unit 128, and are able to feed out and pull in the wires 132A, 132B, and 132C in response to controls by an operator.

The wire 132A extending from the wire feed mechanism 134A extends to the wire support portion 150, and the end portion thereof is suspended from the wire support portion 150. The bucket 24 is connected to the end of the wire 132A.
The wire 132B extending from the wire outfeed mechanism 134B extends to the wire support portion 150, and the end portion thereof is suspended from the wire support portion 150. As described above, the end of the wire 132B is connected to the end of the receiver member 148.

The wire 132C extending from the wire outfeed mechanism 134C is loop-shaped, and is disposed along the arm 130. The wire support portion 150 is attached to a midway portion of the wire 132C, and the wire support portion 150 can be advanced and retracted along the arm 130 by outfeeding and winding up using the wire outfeed mechanism 134C.

Below we discuss a method for dropping coal loaded in a barge, for example, onto the conveyor 12 using the above-described bucket crane 10. First, as shown by arrow A in Fig. 6, the main unit 128 is rotated relative to the base portion 18 so that the arm 130 faces the loaded pile of coal. Thus not only the arm 130, but also the conveyor member 126 rotates so as to face the loaded pile.

Next, by feeding or winding the wire 132C using the wire outfeed mechanism 134C, the wire support portion 150 is advanced and retracted along the arm 130 so as to be positioned over the pile of coal loaded by the bucket 24, as shown by arrow B in Fig. 6. At this point it is advisable to feed out or wind up the wire 132A connected to the bucket 24 and the wire 132B connected to the receiver member 148 using the wire feed mechanisms 134A and 134B by just the same amount as the movement distance of the wire support portion 150 (i.e., the outfeed or windup length of the wire 132C by the wire outfeed mechanism 134C).

Also, the second conveyor member 144 is connected to the wire support portion 150 via the wire 132D, therefore as shown by the arrow E in Fig. 6, by moving the wire support portion 150, the second conveyor member 144 can advance and retract on the first conveyor member 142 in synchronization with said wire support portion 150 so that the hopper 146 is positioned close to the bucket 24 in the horizontal direction.

Then, as shown by arrow F in Fig. 6, the conveyor base portion 140 is raised or lowered relative to the main unit 128 so that the end of the second conveyor member 144 is positioned slightly above the position at which the coal is loaded.

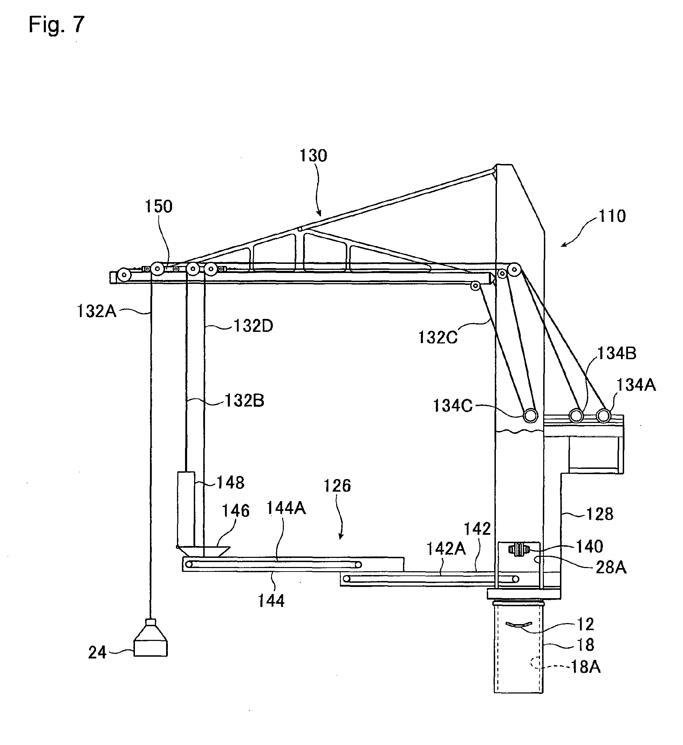

Next, as shown in Fig. 7, the wire 132A is fed out by the wire outfeed mechanism 134A so that the bucket 24 is lowered as shown by the arrow C in Fig. 6. At this point, the wire 132B is wound up by the wire outfeed mechanism 134B so that the receiver member 148 is rotated until it faces upward to prevent interference by the bucket 24 and the receiver member 148.
When the bucket 24 descends to the coal pile, the bucket 24 is opened and filled with coal.

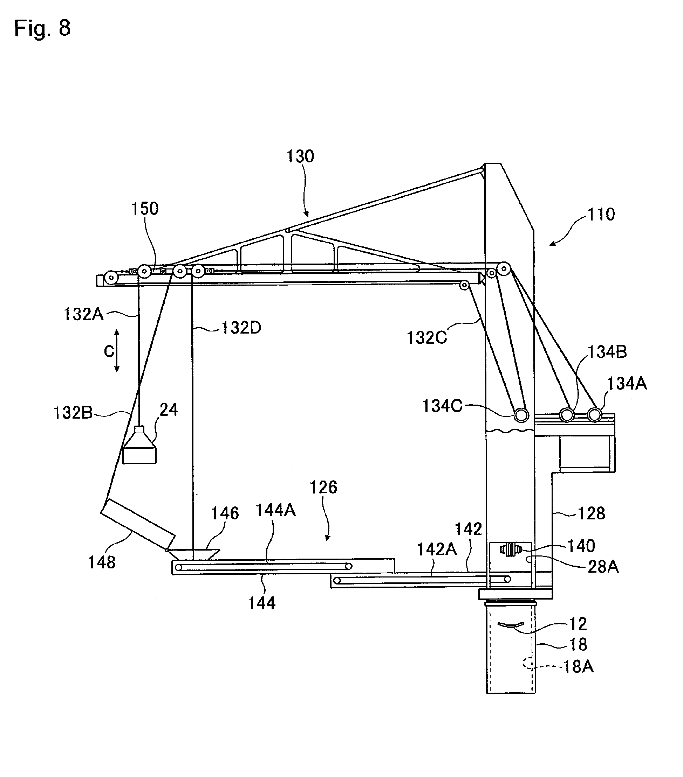

Next, as shown in Fig. 8, the wire 132A is wound up by the wire outfeed mechanism 134A, and the bucket 24 is elevated to above the receiver member 148.Then, as shown by arrow D in Fig. 6, the wire 132B is fed out by the wire outfeed mechanism 134B so that the receiver member 148 is turned until it inclines to face diagonally upward. The receiver member 148 is thus positioned below the bucket 24.

Next, with the receiver member 148 positioned below the bucket 24, the bucket 24 is opened and the coal held within it is caused to drop. Coal from the bucket 24 falls on the receiver member 148 and is guided by this receiver member, passing through the hopper 146 and falling on the second conveyor member 144 conveyor main unit portion 144A.

Coal which has fallen on the conveyor main unit portion 144A of the second conveyor member 144 is transported by the conveyor main unit portion 144A and falls from its end close to the main unit 128 onto conveyor main unit portion 142A or the first conveyor member 142. Coal which has thus fallen on the first conveyor member 142 conveyor main unit portion 142A is transported by the conveyor main unit portion 142A and falls into the conveyor housing space. As described above, the conveyor housing space 28A and the through-hole 18A of the base portion 18 communicate, and the end portion of the conveyor main unit portion 142A of the first conveyor member 142 is positioned above through-hole 18A of the base portion 18, therefore coal which has fallen from the conveyor main unit portion 142A falls into through-hole 18A of the base portion 18, and falls onto the first conveyor 12 extending in the horizontal direction within the through-hole 18A.

Thus large amounts of coal can be fed to the first conveyor 12 by repeating the processes whereby with the receiver member 148 rotated to a vertical state, the bucket 24 is caused to drop and to receive coal in its interior, and whereby the bucket 24 is raised and, with the receiver member 148 rotated and inclined in a horizontal direction, the coal in the bucket 24 is dropped onto a receiver.

Note that when the work of unloading coal on a barge advances and the height of the coal pile on the barge diminishes, it is advisable to rotate the conveyor member 126 downward, as shown by arrow G in Fig. 6. The work of unloading coal can thus be continued without increasing the ascent/descent distance of the bucket 24 (e.g., the outfeed and windup length of the wire by the wire outfeed mechanism 134A).

As explained above, according to the bucket crane 110 of the present embodiment, as same as the first embodiment, the arm 130 and the conveyor member 126 are rotated in the horizontal direction in plan view so that the direction in which the arm 130 extends and the direction in which the conveyor member 126 extends are at all times matched, therefore the work of unloading coal can be carried out simply by the pulling in of the bucket 24 and rotation of the receiver member 148.

Moreover, because of the provision of the receiver member 148, simply by lowering and raising the bucket 24 by the wire outfeed mechanism 134A and rotating the receiver member 148 using the wire outfeed mechanism 134B, the work of unloading coal can thus be carried out without rotating the arm 130 or moving the wire support portion 150. Time spent unloading coal can thus be shortened.

Moreover, because the conveyor member 126 can be raised and lowered relative to the main unit 128, the work of unloading coal can be performed even when the height of the coal for unloading rises relative to the bucket crane 110 due to high tide or to a rising of the vessel owing to a reduction in the amount of coal on the vessel, by raising and lowering the conveyor member 126 to match that height change, without lengthening the bucket 24 ascent/descent length.

Note that in the present embodiment the wire support portion 150 does not necessarily have to be capable of advancing and retracting along the arm 130.

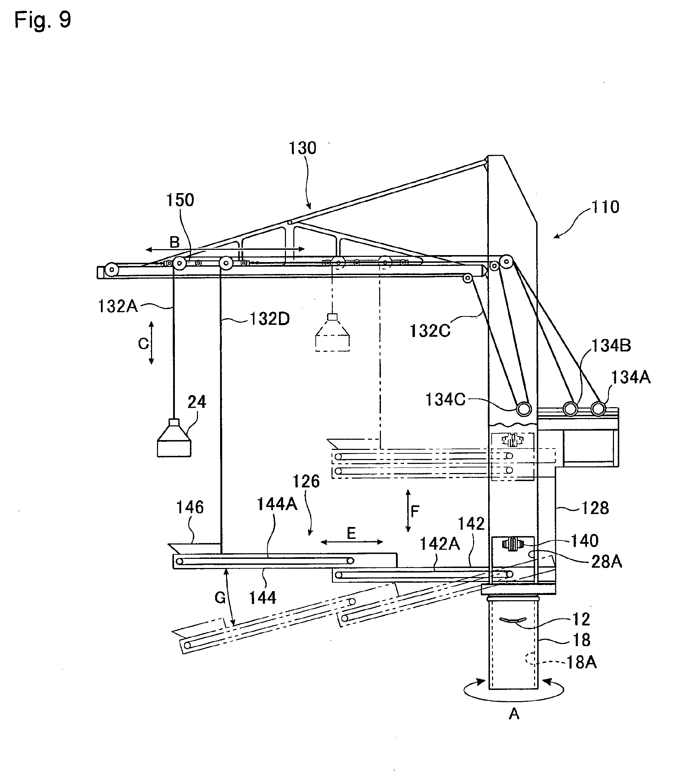

In the present embodiment, a receiver member 148 was provided at the end of the hopper 146, however as shown in Fig. 9, the receiver member 148 may also be omitted.
In such cases, in stead of the rotational movement of the receiver member 148, it is advisable that when the bucket 24 is lowered and the interior thereof filled with coal, the wire support portion 150 is advanced until the bucket 24 is positioned in front of the conveyor member 126, and the bucket is raised, following which the wire support portion 150 is retracted until the bucket 24 is in a position above the hopper 146 and the coal is caused to drop from the bucket 24. Note that for the bucket crane 110 in this case, it is not necessary for the conveyor member 126 to be able to advance and retract; it is sufficient for the wire support portion 150 to be able to advance and retract in the axial direction of the arm 130.

In such cases, when the bucket 24 is lowered and the interior thereof is filled with coal in place of the rotational movement of the receiver member 148, the second conveyor member 144 may also be retracted and the bucket 24 filled with coal and raised to above the conveyor member 126, following which the second conveyor member 144 is advanced. In such cases it is not necessarily required that a receiver member 148 be provided, nor is there a requirement that the wire support portion 150 be able to advance and retract along the arm 130.

### Explanation of Reference Numerals

- 10, 110:: bucket crane
- 18:: base portion
- 24:: bucket
- 26, 126:: conveyor mechanism
- 28, 128:: main unit
- 30, 130:: arm
- 32, 132A, 132B, 132C, 132D:: wire
- 34, 134A, 134B, 134C, 134D:: wire outfeed device
- 148:: receiver member
- 150:: wire support portion

## Claims

1. A crane (10; 110) for unloading freight (4), comprising:
a base portion (18);
a crane main unit (28; 128) erected on the base portion (18);
an arm (30; 130) extending in approximately the horizontal direction from the crane main unit (28; 128);
a conveyor mechanism (26; 126) extending in approximately the horizontal direction from the crane main unit (28; 128) below the arm (30; 130);
a wire support portion (150) capable of advancing and retracting along said arm (30; 130);
a wire (32; 132) an end portion of which is suspended from the wire support portion (150);
a bucket (24) connected to the end portion of the wire (32; 132);
and a wire outfeed device (34; 134) capable of feeding out and winding up the wire (32; 132);
**characterized in that** the arm (30; 130) and the conveyor mechanism (26; 126) can be rotated in the horizontal direction around the same axis so that in plan view the direction in which the arm (30; 130) extends at all times matches the direction in which the conveyor mechanism (26; 126) extends.

2. The crane set forth in Claim 1, wherein the conveyor mechanism (126) is capable of extending and retracting in the longitudinal direction.

## Patentansprüche

1. Kran (10; 110) zum Entladen von Fracht (4), mit:
einem Basisabschnitt (18);
einer Kran-Haupteinheit (28; 128), die auf dem Basisabschnitt (18) errichtet ist;
einem Arm (30; 130), der sich von der Krank-Haupteinheit (28; 128) etwa in der horizontalen Richtung erstreckt;
einem Fördermechanismus (26; 126), der sich von der Kran-Haupteinheit (28; 128) unterhalb des Arms (30; 130) etwa in der horizontalen Richtung erstreckt;
einem Seillagerabschnitt (150), der dazu ausgebildet ist, entlang des Arms (30; 130) vorgeschoben und zurückversetzt zu werden;
einem Seil (32; 132), wobei ein Endabschnitt des Seils von dem Seillagerabschnitt (150) aufgehängt ist;
einem Eimer (24), der mit dem Endabschnitt des Seils (32; 132) verbunden ist; und einer Seilauslassvorrichtung (34; 134), die dazu in der Lage ist, das Seil (32; 132) herauszulassen und aufzuwickeln;
**dadurch gekennzeichnet, dass** der Arm (30; 130) und der Fördermechanismus (26; 126) in der horizontalen Richtung um die gleiche Achse herum gedreht werden können, so dass die Richtung, in die sich der Arm (30; 130) erstreckt, in einer Draufsicht zu allen Zeiten mit der Richtung übereinstimmt, in der sich der Fördermechanismus (26; 126) erstreckt.

2. Kran nach Anspruch 1, wobei der Fördermechanismus (126) dazu in der Lage ist, in der Längsrichtung vorgestreckt und zurückversetzt zu werden.

## Revendications

1. Grue (10 ; 110) pour décharger du fret (4), comprenant :
une partie de base (18) ;
une unité principale de grue (28 ; 128) érigée sur la partie de base (18) ;
un bras (30 ; 130) s'étendant approximativement dans la direction horizontale depuis l'unité principale de grue (28 ; 128) ;
un mécanisme transporteur (26 ; 126) s'étendant approximativement dans la direction horizontale depuis l'unité principale de grue (28 ; 128) sous le bras (30 ; 130) ;
une partie de support de câble (150) capable d'avancer et de reculer le long dudit bras (30 ; 130) ;
un câble (32 ; 132) dont une partie d'extrémité est suspendue depuis la partie de support de câble (150) ;
une benne (24) raccordée à la partie d'extrémité du câble (32 ; 132) ;
et un dispositif de dévidage de câble (34 ; 134) capable de dévider et d'enrouler le câble (32 ; 132) ;
**caractérisée en ce que** le bras (30 ; 130) et le mécanisme transporteur (26 ; 126) peuvent être tournés dans la direction horizontale autour du même axe de telle sorte qu'en vue en plan, la direction dans laquelle le bras (30 ; 130) s'étend corresponde à tout moment à la direction dans laquelle le mécanisme transporteur (26 ; 126) s'étend.

2. Grue selon la revendication 1, dans laquelle le mécanisme transporteur (126) est capable de s'étendre et de se rétracter dans la direction longitudinale.
